# EUROPEAN PATENT SPECIFICATION

(11) **EP 0 824 253 B1**
(45) Date of publication and mention of the grant of the patent: **09.02.2005**
(21) Application number: 97113676.7
(22) Date of filing: 07.08.1997
(51) Int. Cl.: G09G 3/36, G09G 3/20

(54) **Image display device with daytime and nighttime information screens and brightness control method for the same**
Bildanzeigevorrichtung mit Tag- und Nachtinformationsbildanzeigen und Helligkeitssteuerungsverfahren für dieselbe
Dispositif d'affichage d'images avec écrans d'informations diurne et nocturne et méthode d'ajustement de luminosité pour le même

(30) Priority: 07.08.1996 JP 20828996
(43) Date of publication of application: 18.02.1998
(73) Proprietor: SUMITOMO WIRING SYSTEMS, LTD., Yokkaichi City Mie 510 (JP)
(72) Inventor: Moriguchi, Masakatsu, Sumitomo Wiring Systems Ltd., Yokkaichi-City, Mie (JP)
(74) Representative: Müller-Boré & Partner Patentanwälte

(56) References cited:
- WO-A-90/03024
- GB-A- 2 233 530
- GB-A- 2 285 329
- PATENT ABSTRACTS OF JAPAN vol. 8, no. 206 (E-267), 20 September 1984 & JP 59 092689 A (MITSUBISHI DENKI K.K.), 28 May 1984,

## Description

The present invention relates to an image display device and to a brightness control method having a function of selectively switching a nighttime information screen, in particular map screen, and a daytime information screen, in particular map screen, by a switching device.

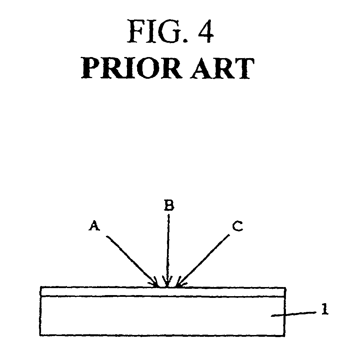

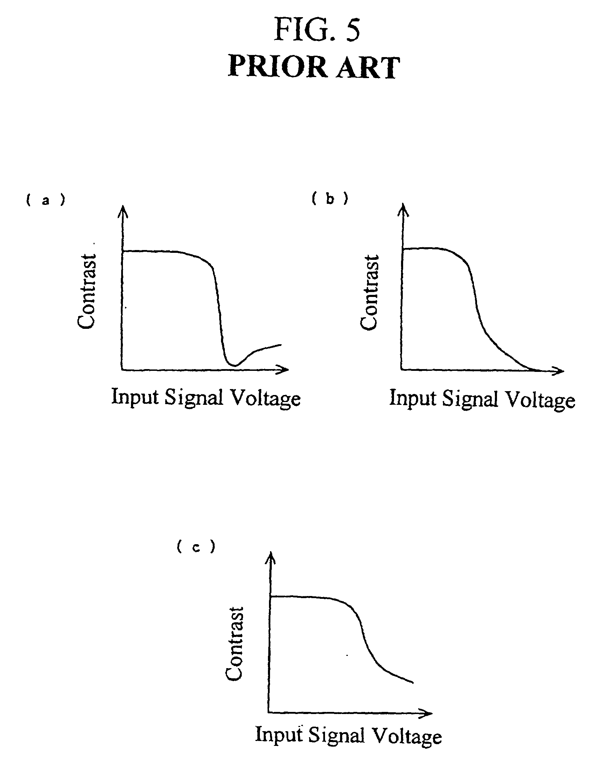

Normally, a liquid crystal display (hereinafter, "LCD") is used in a navigation system to be installed in a vehicle as an image display device. As disclosed in Japanese Unexamined Patent Publications Nos. 6(HEI)-95102 and 6(HEI)-102504, the LCD has a so-called inverse region where black and white portions of a displayed image are inverted as in a negative image of a picture. The inverse region is created by a change in contrast (white-to-black ratio) according to an angle of view. This constrast varies according to an input signal voltage of the LCD. For example, relationships between the input signal voltage and the contrast in the cases where the LCD is viewed from a direction A of about 12 o'clock, from a right above direction B, and from a direction C of about 6 o'clock as shown in FIG. 4 are shown in FIGS. 5(a), 5(b) and 5(c), respectively. As is clear from FIG. 5(a), contrast rises again when the input signal voltage exceeds a specified level. From this, it is known that the inverse region is created in the direction of 12 o'clock of LCD1.

In recent years, navigation systems have proposed which have a function of selectively switching a daytime map screen and a nighttime map screen. Generally, the LCD screen in the daytime map screen tends to be whitish, whereas the LCD screen in the nighttime map screen tends to be blackish. Since the above inversion is likely to occur in the black screen, the inversion is likely to occur at the time of the nighttime map screen while being difficult to occur at the time of the daytime map screen in the navigation systems having such daytime/nighttime switching function.

However, in the known systems having the daytime/nighttime switching function, there is provided no particular means for preventing such an inversion, and a bright voltage for adjusting the brightness of the screen is always constant regardless of whether the daytime or nighttime map screen is set.

As a means for preventing the inversion, a brightness adjustment switch or the like for adjusting the brightness of the screen which switch is provided at the system may be operated so as to adjust the brightness of the screen, particularly at the time of the nighttime map screen to such a level which does not cause the inversion of contrast. However, if the screen is turned into such a satisfactory white screen to the extent that the inversion is unlikely to occur at the time of the nighttime map screen, the screen becomes too white when being switched to the daytime map screen, making it difficult to read the names on the displayed map. Further, if the bright voltage is adjusted such that satisfactory brightness is obtained at the time of the daytime map screen, the inversion is likely to occur when the screen is switched to the daytime map screen.

WO 90/03024 discloses an image display device which may be selectively switched between a night time modus and a daytime modus on the basis of a threshold value switch.

GB-A-2 285 329 discloses a display device having a photo sensor for determining a light intensity and a variation time function.

It is the object of the invention to provide an improved image display device which may provide a satisfactorily bright screen in both night time and daytime and which has a simplified construction and which may be manufactured at low costs.

This object is fulfilled by a device having the features disclosed in claim 1 and a method having the features disclosed in claim 7. Preferred embodiments are defined in the dependent subclaims.

According to the invention, the nighttime bright and/or contrast voltage and the daytime bright and/or contrast voltage preferably set by the operation of the brightness and/or contrast adjustment means are stored in a storage device. When the screen is switched to the nighttime map screen, the nighttime bright and/or contrast voltage is read from the storage device. When the screen is switched to the daytime map screen, the daytime bright and/or contrast voltage is read from the storage device. The brightness and/or contrast control is so performed as to adjust the brightness and/or contrast of the liquid crystal display to the brightness and/or contrast corresponding to the read bright and/or contrast voltage. Accordingly, a satisfactorily bright and/or contrasted screen can constantly be obtained in both nighttime and daytime map screens. Particularly, an occurrence of the inversion in the nighttime map screen can be suppressed as compared with the prior art. Therefore, there can be provided an image display device having an excellent visibility which is suitable for a navigation system to be installed in a vehicle. Also a control of the display device can be performed according to ambient light conditions or occurrence, e.g. when the car is driven into a tunnel the brightness and/or contrast of the display device can be modified (e.g. by switching it to the nighttime brightness and/contrast) to achieve a better readability.

According to a preferred embodiment, the image display device further comprises brightness and/or contrast adjustment means for setting a bright and/or contrast voltage which adjusts the brightness and/or contrast of the display means by setting the nighttime bright and/or contrast voltage for the nighttime information screen and the daytime bright and/or contrast voltage for the daytime information screen.

Preferably, the display means comprises a liquid crystal display.

Further preferably, the storage means comprises:
a permanent data storage, in particular a ROM for storing at least one initial value of the nighttime bright and/or contrast voltage and/or of the daytime bright and/or contrast voltage.
a rewritable data storage, in particular an EEPROM for storing at least one newly set value of the nighttime bright and/or contrast voltage and/or of the daytime bright and/or contrast voltage, being in particular set by the brightness and/or contrast adjusting means.

Still further preferably, the switching device comprises a switch for head a light diode for detecting a brightness and/or contrast inside and/or outside a vehicle.

Most preferably, the controller performs the brightness and/or contrast control of the display means so as to adjust the brightness and/or contrast of the display means such that the brightness and/or contrast is stepwisely and/or continuously varied between the brightness and/or contrast corresponding to the nighttime bright and/or contrast voltage and the daytime bright and/or contrast voltage read by the reading device, preferably depending on a signal corresponding to a brightness and/or contrast inside and/or outside a vehicle.

According to the invention, there is further provided a brightness and/or contrast control method for controlling an image display device, in particular to the invention, comprising the steps of:
discriminating which of a night time or first information screen mode and a day time or second information screen mode has been chosen based upon a switch signal from a switching device;
reading a nighttime bright and/or contrast voltage value or a daytime bright and/or contrast voltage value from a storage means based upon the chosen screen mode,
D/A-converting the read voltage value to an analog voltage and
outputting the analog voltage to a display means of the image display device.

According to a preferred embodiment, the method further comprises the steps of:
detecting whether a brightness and/or contrast adjustment has been performed based upon one or more adjustment signals of a brightness and/or contrast adjustment means, and
writing the nighttime bright and/or contrast voltage value and/or the daytime bright and/or contrast voltage value corresponding to the adjustment signals of the brightness and/or contrast adjustment means in the storage means.

Preferably, the method further comprises the step of initializing the storage means, in particular by reading a predetermined or predeterminable initial value from an initial value storage means and writing the initial value for the nighttime and/or daytime bright and/or contrast voltage value in the storage means.

According to a further preferred embodiment, there is provided an image display device having a function of selectively switching a nighttime map screen and a daytime map screen by a switching device, comprising:
brightness and/or contrast adjustment means for setting a bright and/or contrast voltage which adjusts the brightness and/or contrast of a screen or liquid crystal display,
storage means for storing a nighttime bright and/or contrast voltage for the nighttime map screen and a daytime bright and/or contrast voltage for the daytime map screen which are set by the operation of the brightness and/or contrast adjustment means,
a reading device for reading the nighttime bright and/or contrast voltage when a screen is switched to the nighttime map screen by the switching device, and the daytime bright and/or contrast voltage when the screen is switched to the daytime map screen by the switching device, and
a controller for performing a brightness and/or contrast control so as to adjust the brightness and/or contrast of the liquid crystal display to a brightness and/or contrast corresponding to the nighttime bright and/or contrast voltage or the daytime bright and/or contrast voltage read by the reading device.

In this invention, when being set by the operation of the brightness and/or contrast adjustment means, the nighttime bright and/or contrast voltage and the daytime bright and/or contrast voltage are stored in the storage device. When the screen is switched to the nighttime map screen, the nighttime bright and/or contrast voltage is read from the storage means by the reading device, and the controller controllably adjusts the brightness and/or contrast of the liquid crystal display to a brightness and/or contrast corresponding to the read nighttime bright and/or contrast voltage. Likewise, when the screen is switched to the daytime map screen, the daytime bright and/or contrast voltage is read and the brightness and/or contrast of the liquid crystal display is controllably adjusted to a brightness and/or contrast corresponding to the read daytime bright and/or contrast voltage.

According to a further preferred embodiment of the invention there is provided an image display device for displaying images in a selected one of a first visibility condition and a second visibility condition on an electrically operated display, comprising:
storage means for storing a first voltage for the display and a second voltage for the display;
switch means for selectively switching between first and second positions corresponding respectively to the first visibility condition and the second visibility condition;
a reading device for reading the first voltage in the storage means when the switch means is in said first position and for reading the second voltage from the storage means when the switch is in the second position; and
a controller for adjusting output of the display between a first display condition and a second display condition in accordance with the voltage read by the reading device, such that the first display condition displays images selected for said first visibility condition and such that said second display condition displays images selected for said second visibility condition.

Preferably, the first visibility condition defines a condition of low ambient light, and wherein said second visibility condition defines a condition of high ambient light, said first and second voltages being set such that said first display condition defines a display of images brighter than the second display condition.

Further preferably, the first visibility condition defines a condition of low ambient light, and wherein said second visibility condition defines a condition of high ambient light, said first and second voltages being set such that said second display condition defines greater image contrast than said first display condition.

Still further preferably, the display means comprises a liquid crystal display.

Most preferably, the switching device comprises a light diode for detecting ambient light conditions.

These and other objects, features and advantages of the present invention will become more apparent upon a reading of the following detailed description and accompanying drawings in which:
FIG. 1 is a block diagram of one embodiment of the invention,
FIGS. 2 and 3 are a flow chart showing the operation of the embodiment,
FIG. 4 is a diagram showing a prior art image display device, and
FIGS. 5(a), 5(b), 5(c) are graphs showing the characteristics of the prior art image display device.

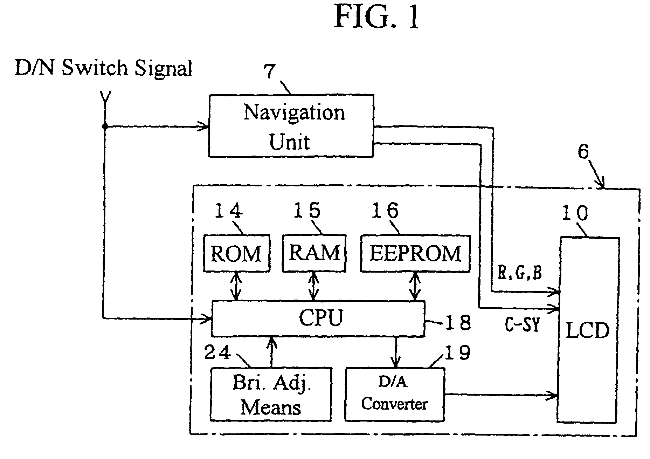

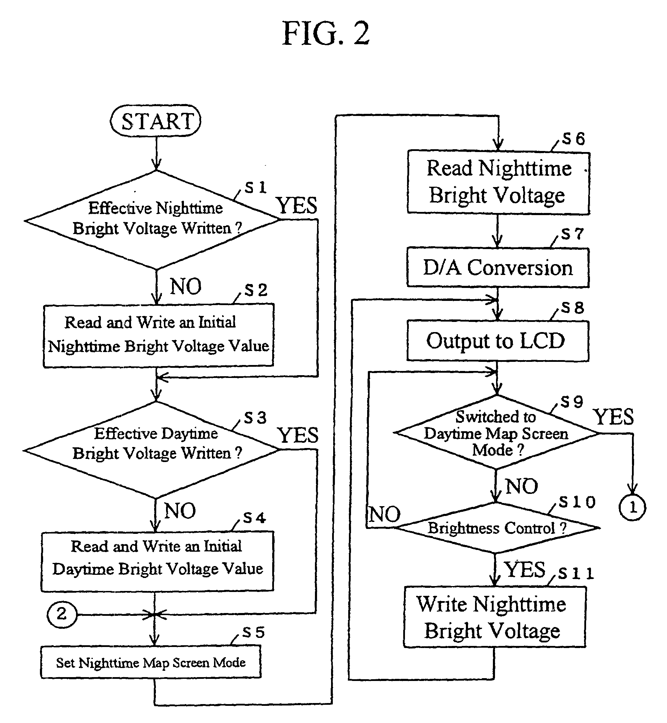

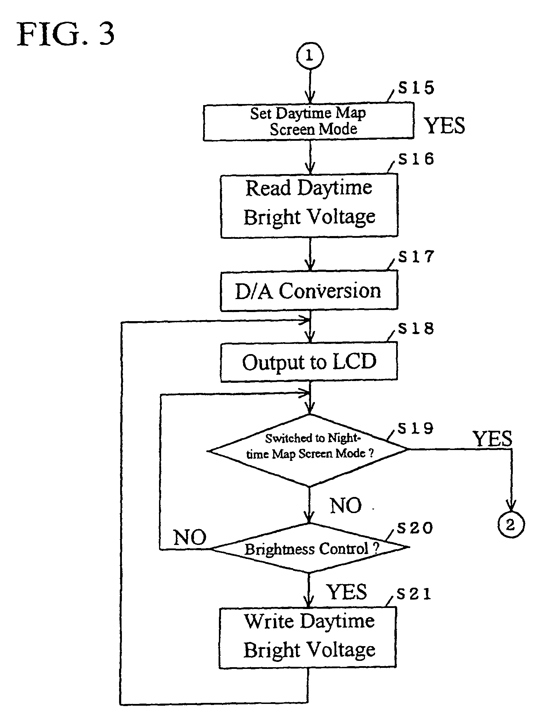

FIG. 1 is a block diagram of one embodiment of the invention, and FIGS. 2 and 3 are a flow chart showing the operation of this embodiment.

First, the overall construction is described. As shown in FIG. 1, a monitor unit 6 and a navigation unit 7 are provided.

The monitor unit 6 includes a storage means, e.g. an EEPROM 16 for storing a nighttime bright voltage for a nighttime map screen and a daytime bright voltage for a daytime map screen which are set by operating a brightness adjustment means 24 constructed by a touch switch, a remote controller, a variable resistance knob or the like. A CPU 18 which functions as a reading device and a controller writes and reads the nighttime and daytime bright voltages in and from the EEPROM 16. The read nighttime and daytime bright voltages are output to a display means, e.g. an LCD 10, a projection screen (e.g. integrated in the windshield), an electron beam tube, etc. after being digital to analog (D/A) converted by a D/A converter 19.

The navigation unit 7 outputs R-, G-, B-signals and a composite synchronization signal C-Sy based on a navigation data such as a map data stored in advance in an unillustrated storage means such as a built-in memory. Alternatively also other color signals (such as C-, M-, Y-signals) and/or synchronization or control signals may be used. These output signals are input to the LCD 10, whereon a navigation screen including a road map corresponding to the navigation data is displayed.

The nighttime and daytime map screens are switched in accordance with a daytime/nighttime switch signal sent to the navigation unit 7. Generally, as this daytime/nighttime switch signal, an on-off signal for head lights or tail lights is used as it is additionally also a light diode sensing or detecting the brightness inside and/or outside the vehicle can be used as a switching device. This switch signal is also input to the CPU 18, which in turn discriminates a selected mode and switches thereto. The nighttime and daytime bright voltages are written in the EEPROM 16 in accordance with this mode.

Identified by 14 in FIG. 1 is a permanent storage means, e.g. a ROM for storing an initial value of the nighttime bright voltage set, e.g. at the time of shipment from a factory, and by 15 a rewritable storage means, e.g. a RAM for providing an operation work area of the CPU 18.

Next, a brightness control is described with respect to the flow chart of FIGS. 2 and 3.

First, as shown in FIG. 2, whether an effective voltage value has already been written in a write area of the EEPROM 16 for the nighttime bright voltage is discriminated (Step S1). If the discrimination result is "NO", the initial value of the nighttime bright voltage set, e.g. at the time of shipment is read from the ROM 14 and written in the EEPROM 16 (Step S2). On the other hand, if the discrimination result in Step S1 is "YES", Step S3 follows in the same way as the operation of Step S2 is completed.

In Step S3, whether the effective voltage has already been written in the write area of the EEPROM 16 for the daytime bright voltage is discriminated . If the discrimination result is "NO", the initial value of the daytime bright voltage set, e.g. at the time of shipment is read from the ROM 14 and written in the EEPROM 16 (Step S4). On the other hand, if the discrimination result in Step S3 is "YES", Step S5 follows in the same way as the operation of Step S4 is completed. The nighttime map screen is set in accordance with the daytime/nighttime switch signal (Step S5), and the nighttime bright voltage is read from the EEPROM 16 (Step S6). After the read nighttime bright voltage is D/A converted by the D/A converter 19, a digital value of the nighttime bright voltage is output to the LCD 10 (Step S8).

Further, whether the screen has been switched to the daytime map screen is discriminated (Step S9). If the discrimination result is "NO", whether a brightness control in the nighttime map screen has been performed is discriminated (Step S10). If this discrimination result is "NO", Step S9 follows. On the other hand, if the discrimination result in Step S10 is "YES", the nighttime bright voltage set by the brightness adjustment means 24 during the brightness control is newly written in the EEPROM 16 (Step S11). Thereafter, Step S8 follows.

If the discrimination result in Step S9 is "YES", as shown in FIG. 3, the daytime map screen is set in accordance with the daytime/nighttime switch signal (Step S15); the daytime bright voltage is read from the EEPROM 16 (Step S16); and after the read daytime bright voltage is D/A converted by the D/A converter 19 (Step S17), a digital value of the daytime bright value is output to the LCD 10 (Step S18).

Further, whether the screen has been switched to the nighttime map screen is discriminated (Step S19). If the discrimination result is "NO", whether the brightness control in the navigation mode has been performed is discriminated (Step S20). If this discrimination result is "NO", Step S19 follows. On the other hand, if the discrimination result in Step S20 is "YES", the daytime bright voltage set by the brightness adjustment means 24 during the brightness control is newly written in the EEPROM 16 (Step S21) and Step S18 follows thereafter. If the discrimination result in Step S19, Step S5 follows.

As described above, when the nighttime bright voltage is set in the nighttime map screen or the daytime bright voltage is set in the daytime map screen by the operation of the brightness adjustment means 24, the set bright voltage is written in the EEPROM 16. When the screen is switched to the nighttime map screen, the CPU 18 reads the nighttime bright voltage from the EEPROM 16 and controls the brightness of the LCD 10 so as to conform to the read nighttime bright voltage. Likewise, when the screen is switched to the daytime map screen, the daytime bright voltage is read and the brightness of the LCD 10 is controlled so as to conform to the read daytime bright voltage.

Since the brightness control is performed in both nighttime and daytime map screens, there can be prevented an occurrence of inconveniences residing in the prior art: even if a satisfactorily bright screen is obtained in the daytime map screen, the screen becomes too dark when being switched to the nighttime map screen, thereby creating an inverse area; or even if a satisfactorily bright screen is obtained in the nighttime map screen, the screen becomes too bright when being switched to the daytime map screen, thereby making it difficult to read the names on a displayed map. Thus, a satisfactorily bright screen can constantly be obtained in both nighttime and daytime map screens.

The invention was exemplarily described with respect to a map screen (as a displaying device). However it is to be understood that the invention may also be applied to any other type of information display means such as a radio frequency or station display, a broadcast information display or a vehicle data (e.g. speed, oil temperature or oil pressure etc.) display.

## Claims

1. An image display device having a function of selectively switching a nighttime information screen and a daytime information screen by a switching device, **characterized by**
storage means (16; 14) for storing a nighttime bright and/or contrast voltage for the nighttime information screen and a daytime bright and/or contrast voltage for the daytime information screen,
a reading device (18) for reading the nighttime bright and/or contrast voltage when a display means (10) is switched to the nighttime information screen by the switching device, and the daytime bright and/or contrast voltage when the display means (10) is switched to the daytime information screen by the switching device, and
a controller (18) for performing a brightness and/or contrast control of the display means (10) so as to adjust the brightness and/or contrast of the display means (10) to a brightness and/or contrast corresponding to the nighttime bright and/or contrast voltage or the daytime bright and/or contrast voltage read by the reading device (18),
wherein the switching device comprises a switch for head lights and/or tail lights.

2. An image display device according to claim 1, further comprising brightness and/or contrast adjustment means (24) for setting a bright and/or contrast voltage which adjusts the brightness and/or contrast of the display means (10) by setting the nighttime bright and/or contrast voltage for the nighttime information screen and the daytime bright and/or contrast voltage for the daytime information screen.

3. An image display device according to one or more of the preceding claims, wherein the display means (10) comprises a liquid crystal display (LCD).

4. An image display device according to one or more of the preceding claims, wherein the storage means (16;14) comprises:
a permanent data storage (14), in particular a ROM (14) for storing at least one initial value of the nighttime bright and/or contrast voltage and/or of the daytime bright and/or contrast voltage.
a rewritable data storage (16), in particular an EEPROM (16) for storing at least one newly set value of the nighttime bright and/or contrast voltage and/or of the daytime bright and/or contrast voltage, being in particular set by the brightness and/or contrast adjusting means (24).

5. An image display device according to one or more of the preceding claims, wherein the switching device comprises a light diode for detecting a brightness and/or contrast inside and/or outside a vehicle.

6. An image display device according to one or more of the preceding claims, wherein the controller (18) comprises means arranged to perform the brightness and/or contrast control of the display means (10) so as to adjust the brightness and/or contrast of the display means (10) such that the brightness and/or contrast is stepwisely and/or continuously varied between the brightness and/or contrast corresponding to the nighttime bright and/or contrast voltage and the daytime bright and/or contrast voltage read by the reading device (18), preferably depending on a signal corresponding to a brightness and/or contrast inside and/or outside a vehicle.

7. A brightness and/or contrast control method for controlling an image display device, in particular according to one or more of the preceding claims, comprising the steps of:
discriminating (S9; S19) which of a night time information screen mode and a day time information screen mode has been chosen based on a switch signal from a switching device;
**characterized by** the steps of:
providing the switch signal on the basis of a switch for head lights and/or tail lights,
reading (S6; S16) a nighttime bright and/or contrast voltage value or a daytime bright and/or contrast voltage value from a storage means (16; 14) based on the chosen screen mode,
D/A-converting (S7; S17) the read voltage value to an analog voltage and
outputting (S8; S18) the analog voltage to a display means (10) of the image display device.

8. A method according to claim 7, further comprising the steps of:
detecting (S10; S20) whether a brightness and/or contrast adjustment has been performed based upon one or more adjustment signals of a brightness and/or contrast adjustment means (24), and
writing (S11; S21) the nighttime bright and/or contrast voltage value and/or the daytime bright and/or contrast voltage value corresponding to the adjustment signals of the brightness and/or contrast adjustment means in the storage means (16).

9. A method according to claim 7 or 8, further comprising the step of initializing (S1, S2; S3, S4) the storage means (16), in particular by reading a predetermined or predeterminable initial value from an initial value storage means (14) and writing the initial value for the nighttime and/or daytime bright and/or contrast voltage value in the storage means (16).

## Patentansprüche

1. Bildanzeigevorrichtung, welche eine Funktion eines selektiven bzw. wahlweisen Umschaltens eines Nachtinformationsschirms bzw. einer Nachtinformationsanzeige und eines Taginformationsschirms bzw. einer Taginformationsanzeige durch eine Umschaltvorrichtung aufweist, **gekennzeichnet durch**
Speichermittel (16; 14) zum Speichern einer Nachthelligkeit bzw. Nacht-Helligkeits-Spannung und/oder Nacht-Kontrastspannung für die Nachtinformationsanzeige und einer Taghei(igkeit bzw. Tag-Helligkeits-Spannung und/oder einer Tag-Kontrastspannung für die Taginformationsanzeige,
eine Lesevorrichtung (18) zum Lesen der Nacht-Helligkeits- und/oder -Kontrastspannung, wenn Anzeigemittel (10) zu der Nachtinformationsanzeige **durch** die Umschaltvorrichtung umgeschaltet sind, und der Tag-Helligkeits- und/oder -Kontrastspannung, wenn die Anzeigemittel (10) auf die Taginformationsanzeige **durch** die Umschaltvorrichtung umgeschaltet sind, und
eine Regel- bzw. Steuereinrichtung bzw. einen Controller (18) zum Durchführen einer Helligkeits- und/oder Kontraststeuerung der Anzeigemittel (10), um die Helligkeit und/oder den Kontrast der Anzeigemittel (10) auf eine Helligkeit und/oder einen Kontrast entsprechend der Nacht-Helligkeits- und/oder -Kontrastspannung oder der Tag-Helligkeits- und/oder -Kontrastspannung einzustellen, welche **durch** die Lesevorrichtung (18) gelesen sind,
wobei die Schaltvorrichtung einen Schalter für Scheinwerfer und/oder Rücklichter umfaßt.

2. Bildanzeigevorrichtung nach Anspruch 1, weiters umfassend Helligkeits- und/oder Kontrast-Einstellmittel (24) zum Einstellen einer Helligkeit bzw. Helligkeits- und/oder Kontrastspannung, welche die Helligkeit und/oder den Kontrast der Anzeigemittel (10) durch ein Einstellen der Nacht-Helligkeits- und/oder -Kontrastspannung für die Nachtinformationsanzeige und der Tag-Helligkeits- und/oder -Kontrastspannung für die Taginformationsanzeige einstellt.

3. Bildanzeigevorrichtung nach einem oder mehreren der vorangehenden Ansprüche, wobei die Anzeigemittel (10) eine Flüssigkristallanzeige (LCD) umfassen.

4. Bildanzeigevorrichtung nach einem oder mehreren der vorangehenden Ansprüche, wobei die Speichermittel (16; 14) umfassen:
eine permanente Datenspeicherung (14), insbesondere ein ROM (14), zum Speichern wenigstens eines ursprünglichen bzw. Ausgangswerts der Nacht-Helligkeitsund/oder -Kontrastspannung und/oder der Tag-Helligkeits- und/oder -Kontrastspannung,
eine überschreibbare Datenspeicherung (16), insbesondere ein EEPROM (16) zum Speichern von wenigstens einem neu eingestellten Wert der Nacht-Helligkeitsund/oder -Kontrastspannung und/oder der Tag-Helligkeits- und/oder -Kontrastspannung, welche insbesondere durch die Helligkeits- und/oder Kontrast-Einstellmittel (24) eingestellt sind.

5. Bildanzeigevorrichtung nach einem oder mehreren der vorangehenden Ansprüche, wobei die Schaltvorrichtung eine Lichtdiode zum Detektieren einer Helligkeit und/oder eines Kontrasts innerhalb und/oder außerhalb eines Fahrzeugs umfaßt.

6. Bildanzeigevorrichtung nach einem oder mehreren der vorangehenden Ansprüche, wobei die Regel- bzw. Steuereinrichtung (18) Mittel umfaßt, welche angeordnet sind, um die Helligkeits- und/oder Kontraststeuerung bzw. -regelung der Anzeigemittel (10) derart durchzuführen, um die Helligkeit und/oder den Kontrast der Anzeigemittel (10) derart einzustellen, daß die Helligkeit und/oder der Kontrast stufenweise und/oder kontinuierlich zwischen der Helligkeit und/oder dem Kontrast entsprechend der Nacht-Helligkeits- und/oder -Kontrastspannung und der Tag-Helligkeits- und/oder -Kontrastspannung, welche durch die Lesevorrichtung (18) gelesen sind, vorzugsweise in Abhängigkeit von einem Signal entsprechend einer Helligkeit und/oder einem Kontrast innerhalb und/oder außerhalb eines Fahrzeugs variiert sind bzw. werden.

7. Helligkeits- und/oder Kontrast-Regel- bzw. -Steuerverfahren zum Regeln bzw. Steuern einer Bildanzeigevorrichtung, insbesondere gemäß einem oder mehreren der vorangehenden Ansprüche, umfassend die Schritte eines:
Unterscheidens bzw. Diskriminierens (S9; S19), welcher eines Nachtinformationsanzeige- bzw. Nachtinformationsschirm-Modus und eines Taginformationsanzeige- bzw. Taginformationsschirm-Modus ausgewählt wurde, basierend auf einem Schaltsignal von einer Schaltvorrichtung;
**gekennzeichnet durch** die Schritte eines:
Bereitstellens des Schaltsignals auf der Basis eines Schalters für Scheinwerfer und/oder Rücklichter,
Lesens (S6; S16) eines Nacht-Helligkeits- und/oder -Kontrastspannungswerts oder eines Tag-Helligkeits- und/oder -Kontrastspannungswerts aus Speichermitteln (16; 14) basierend auf dem gewählten Schirm- bzw. Anzeigemodus,
D/A-Umwandelns (S7; S17) des gelesenen Spannungswerts in eine analoge Spannung, und
Ausgebens (S8; S18) der analogen Spannung an Anzeigemittel (10) der Bildanzeigevorrichtung.

8. Verfahren nach Anspruch 7, weiters umfassend die Schritte eines:
Detektierens (S10; S20), ob eine Helligkeits- und/oder -Kontrasteinstellung durchgeführt wurde, basierend auf einem oder mehreren Einstellsignal(en) von Helligkeitsund/oder Kontrast-Einstellmitteln (24), und
Schreibens (S11; S21) des Nacht-Helligkeits- und/oder -Kontrastspannungswerts und/oder des Tag-Helligkeits- und/oder -Kontrastspannungswerts entsprechend den Einstellsignalen der Helligkeits- und/oder Kontrast-Einstellmittel in den Speichermitteln (16).

9. Verfahren nach Anspruch 7 oder 8, weiters umfassend den Schritt eines Initialisierens (S1, S2; S3, S4) der Speichermittel (16), insbesondere durch ein Lesen eines vorbestimmten oder vorbestimmbaren ursprünglichen bzw. Ausgangswerts von Ausgangswert-Speichermitteln (14) und eines Schreibens des Ausgangswerts für den Nacht- und/oder Tag-Helligkeits- und/oder -Kontrastspannungswert in den Speichermitteln (16).

## Revendications

1. Dispositif d'affichage d'image possédant une fonction pour commuter sélectivement entre un écran d'informations nocturne et un écran d'informations diurne grâce à un dispositif de commutation, **caractérisé par**
un moyen de stockage (16 ; 14) pour stocker une tension de luminosité et/ou de contraste nocturne pour l'écran d'informations nocturne et une tension de luminosité et/ou de contraste diurne pour l'écran d'informations diurne,
un dispositif de lecture (18) pour lire la tension de luminosité et/ou de contraste nocturne lorsqu'un moyen d'affichage (10) est commuté en l'écran d'informations nocturne par le dispositif de commutation, et la tension de luminosité et/ou de contraste diurne lorsque le moyen d'affichage (10) est commuté en l'écran d'informations diurne par le dispositif de commutation, et
un contrôleur (18) pour exécuter une commande de la luminosité et/ou du contraste du moyen d'affichage (10) de façon à ajuster la luminosité et/ou le contraste du moyen d'affichage (10) en une luminosité et/ou un contraste correspondant à la tension de luminosité et/ou de contraste nocturne ou à la tension de luminosité et/ou de contraste diurne lue par le dispositif de lecture (18),
dans lequel le dispositif de commutation comprend un commutateur pour les feux avants et/ou les feux arrière.

2. Dispositif d'affichage d'image selon la revendication 1, comprenant en outre un moyen d'ajustement de la luminosité et/ou du contraste (24) pour définir une tension de luminosité et/ou de contraste ajustant la luminosité et/ou le contraste du moyen d'affichage (10) en définissant la tension de luminosité et/ou de contraste nocturne pour l'écran d'informations nocturne et la tension de luminosité et/ou de contraste diurne pour l'écran d'informations diurne.

3. Dispositif d'affichage d'image selon l'une ou plusieurs des revendications précédentes, dans lequel le moyen d'affichage (10) comprend un écran à cristaux liquides (LCD).

4. Dispositif d'affichage d'image selon l'une ou plusieurs des revendications précédentes, dans lequel le moyen de stockage (16 ; 14) comprend :
une mémoire de données permanente (14), en particulier une ROM (14) pour stocker au moins une valeur initiale de la tension de luminosité et/ou de contraste nocturne et/ou de la tension de luminosité et/ou de contraste diurne,
une mémoire de données réinscriptible (16), en particulier une EEPROM (16) pour stocker au moins une valeur nouvellement définie de la tension de luminosité et/ou de contraste nocturne et/ou de la tension de luminosité et/ou de contraste diurne, définie en particulier par le moyen d'ajustement de la luminosité et/ou du contraste (24).

5. Dispositif d'affichage d'image selon l'une ou plusieurs des revendications précédentes, dans lequel le dispositif de commutation comprend une diode lumineuse pour détecter une luminosité et/ou un contraste à l'intérieur et/ou à l'extérieur d'un véhicule.

6. Dispositif d'affichage d'image selon l'une ou plusieurs des revendications précédentes, dans lequel le contrôleur (18) comprend un moyen adapté à l'exécution de la commande de luminosité et/ou de contraste du moyen d'affichage (10) de façon à ajuster la luminosité et/ou le contraste du moyen d'affichage (10) de sorte que la luminosité et/ou le contraste soit progressivement ou continuellement changé entre la luminosité et/ou le contraste correspondant à la tension de luminosité et/ou de contraste nocturne et la tension de luminosité et/ou de contraste diurne lue par le dispositif de lecture (18), de préférence en fonction d'un signal correspondant à une luminosité et/ou un contraste à l'intérieur et/ou à l'extérieur d'un véhicule.

7. Procédé de commande de la luminosité et/ou du contraste pour commander un dispositif d'affichage d'image, en particulier selon l'une ou plusieurs des revendications précédentes, comprenant les étapes consistant à :
distinguer (S9 , S19) quel mode a été choisi entre un mode d'écran d'informations nocturne et un mode d'écran d'informations diurne en fonction d'un signal de commutation provenant d'un dispositif de commutation ;
**caractérisé par** les étapes consistant à :
délivrer le signal de commutation en fonction d'un commutateur pour les feux avants et/ou les feux arrière,
lire (S6 ; S16) une valeur de tension de luminosité et/ou de contraste nocturne ou une valeur de tension de luminosité et/ou de contraste diurne depuis un moyen de stockage (16 ; 14) en fonction du mode d'écran choisi,
soumettre à une conversion N/A (S7 ; S17) la valeur de tension lue pour la convertir en une tension analogique et
délivrer (S8; S18) la tension analogique à un moyen d'affichage (10) du dispositif d'affichage d'image.

8. Procédé selon la revendication 7, comprenant en outre les étapes consistant à :
détecter (S10 ; S20) si un ajustement de la luminosité et/ou du contraste a été effectué en fonction d'un ou plusieurs signaux d'ajustement d'un moyen d'ajustement de la luminosité et/ou du contraste (24), et
écrire (S11; S21) la valeur de tension de luminosité et/ou de contraste nocturne et/ou la valeur de tension de luminosité et/ou de contraste diurne correspondant aux signaux d'ajustement du moyen d'ajustement de la luminosité et/ou du contraste dans le moyen de stockage (16).

9. Procédé selon la revendication 7 ou 8, comprenant en outre l'étape d'initialisation (S1, S2 ; S3, S4) du moyen de stockage (16), en particulier en lisant une valeur initiale prédéterminée ou pouvant être prédéterminée dans un moyen de stockage de la valeur initiale (14) et en écrivant la valeur initiale pour la valeur de tension de la luminosité et/ou du contraste nocturne et/ou diurne dans le moyen de stockage (16).
